# EUROPEAN PATENT SPECIFICATION

(11) **EP 1 196 068 B1**
(45) Date of publication and mention of the grant of the patent: **31.08.2005**
(21) Application number: 01923836.9
(22) Date of filing: 25.04.2001
(51) Int. Cl.: A47J 27/21

(54) **LIQUID HEATING VESSELS**
WASSERERHITZUNGSGERÄT
RECIPIENTS POUR CHAUFFER DES LIQUIDES

(30) Priority: 25.04.2000 GB 0010088
(43) Date of publication of application: 17.04.2002
(60) Divisional application: 05011803.3
(73) Proprietor: STRIX LIMITED, Isle of Man IM9 2RG (GB)
(72) Inventor: SCOTT, Michael, James, Isle of Man IM9 5PH (GB); BEAUMONT, Nigel, Isle of Man IM9 6PL (GB)
(74) Representative: Leckey, David Herbert
(86) International application number: PCT/GB2001/001855
(87) International publication number: WO 2001/080698

(56) References cited:
- EP-A- 0 636 332
- DE-A- 19 706 216
- DE-U- 29 903 592
- GB-A- 2 330 064

## Description

The present invention relates to liquid heating vessels and in particular to a system for mounting a generally planar heating element in the bottom of a liquid heating vessel.

In the United Kingdom, liquid heating vessels such as kettles and hot water jugs have traditionally employed sheathed heating elements which extend into the vessel through an aperture in the wall or base of the vessel. However, in recent times there has been a move to replace such heating elements with planar heating elements which form at least part of the base of the vessel. Such heaters typically comprise a sheathed heating element suitably bonded to the underside of a plate, a thick film resistive heating track applied to the underside of a plate, or a sheathed heating element insert cast into a die casting. Examples of some such heaters are shown in WO 96/18331. Such heaters have the advantage of being more easily cleaned and of giving a more aesthetic appearance to the liquid heating vessel.

Various systems have been proposed for mounting planar heaters in the bottom of liquid heating vessels, particularly plastics walled vessels. WO 96/18331 referred to above proposes clamping a channel formed on the heater around a depending flange formed on the vessel body. Whilst this system provides an extremely sound fixing with excellent sealing, it is not easily removable if a vessel needs to be reworked (if for example a heater is found to be faulty on final test) and it cannot be used in certain shapes of vessel where a depending flange cannot be formed or where access to the exterior of the flange for crimping is not possible. This is particularly so with the more stylish "bullet" style jugs which are producible with a single core mould.

Other systems have been proposed which clamp the heater in position using a clamping means acting against the heater. Such clamping means have included a number of pillars extending from a base cover of the vessel to engage the heater or a clamping ring held in place by a plurality of screws which engage in mounting bosses provided on the vessel body. However, such systems are not entirely satisfactory as they do not adequately take account of certain problems which arise in plastics vessels.

The major problem is the thermal expansion of the vessel body during use. A typical polypropylene jug body may increase in length and diameter by up to about 1mm, and the mounting needs to be able to compensate for such movement while still maintaining a satisfactory seal between the vessel body and the heater. At the same time the forces applied to the vessel to ensure satisfactory sealing should not be so great as to cause thermal creep of the vessel during use, which in time could lead to relaxation of the seal and leakage. The mounting pillars referred to above do not adequately accommodate expansion whilst the clamping screws exert locally very high forces which can lead to thermal creep. Indeed, the prior art clamping arrangements are substantially rigid and rely upon the resilience of the seal to accommodate any expansion or movement. This is not ideal.

DE 2990359U discloses a system for mounting a heater in a liquid heating vessel in which the heater is mounted on the base of the body by a circlip.

Accordingly, what is required is a system for mounting a heater in the base of a liquid heating vessel which is easy to implement and which provides satisfactory sealing irrespective of the thermally induced movement of the heater and the vessel body in use, particularly in plastics bodied vessels.

From a first aspect, therefore, the present invention provides a liquid heating vessel having body and a heater mounted in a base portion of the body, said vessel body comprising an annular surface for receiving a seal, a seal arranged between the heater and the annular surface, and axially compressible spring means arranged to exert an axial biasing force for sealing the seal against the annular surface; wherein the spring means comprises a plurality of leaf spring tongues arranged between the heater and mounting locations on the vessel,
the upper ends of the spring tongues being joined by a ring; and
the separate, outer ends of the leaf spring tongues extending downwardly to engage the mounting locations on the vessel.

Thus in accordance with the invention, axially compressible (i.e. compressible axially of the vessel) spring means apply an axial spring force to effect sealing of the heater in the vessel base. The biasing force maintains the pressure on the seal even in circumstances where movement of the vessel body and heater occurs so as to prevent leakage. Furthermore, the sealing force provided by the spring means can be tailored so that irrespective of the movement of the vessel body the sealing force can be kept sufficiently high as to ensure satisfactory sealing but at the same time not be so high as to lead to thermal creep of the vessel body.

Preferably, the spring means is configured so as to have a relatively low spring rate whereby the spring biasing force is relatively constant even with thermal movement of the vessel body.

Preferably the spring means is made from a metallic material for strength and heat resistance, and most preferably from a metallic material having a relatively low thermal conductivity, for example stainless steel.

The leaf springs are preferably relatively long so as to increase the thermal path from the heater to the mounting location and thus reduce the possibility of thermal damage to the mounting location. The springs will, however, act to dissipate some heat from the heater in an overheat situation, thereby helping to prevent overshoot at the edges of the heater in contact with the seal.

In the preferred embodiment, the leaf springs are arcuate at least over a portion of their length, possibly extending radially inwardly from their upper end and then radially outwardly for engagement with the locating means. This gives a spring shape which can accommodate a significant amount of movement and at the same time apply a suitably constant spring force.

Typically the leaf springs may exerting a biasing force of up to say between 3 and 10kg. This is sufficient for sealing purposes but is sufficiently low as to prevent creep. Preferably at least 5, more preferably at least 6, for example at least eight springs are provided, depending on the size of the heater. In practice the sealing force exerted by the spring means should be sufficient to maintain the seal under the expected operating conditions but not be so high as to cause creep in the vessel. It should also be sufficient to resist being displaced by a force applied to the upper surface of the heater, eg during cleaning. Such force levels may be determined empirically by the skilled person, but typically may be between 30 and 75kg.

In order to facilitate installation, the springs are suitably linked. The upper ends of the springs are joined by a ring which may abut against the heater or seal. Preferably the ring has a continuous upper surface for spreading the sealing load around the heater.

In one form, the upper end of the ring may be generally planar with the leaf springs depending from the periphery of the planar region, most preferably from the inner periphery thereof. The spring can in this instance be formed from a planar blank with the leaf springs formed out of the plane of the blank into an appropriate shape.

In another arrangement, however, the ring may comprise a generally cylindrical wall whose upper end may cooperate with the heater or seal and from whose wall extend the leaf springs. The spring in this arrangement may be made from a planar blank which is formed into a cylindrical shape by joining its ends with leaf springs suitably released from the wall of the blank and deformed to shape. The ends of the blank may be welded together or be provided with interlocking formations.

The upper end of the cylindrical wall need not engage under the heater, and in a preferred embodiment it engages around the edge of the heater to assist in locating the ring. In this embodiment, the springs depending from the ring are provided with bearing surfaces for engagement under the heater. Accordingly the springs may have bearing sections extending inwardly at about 90° to the plane of the ring for engagement under the heater.

The mounting locations for the spring means may be provided on any suitable part of the,vessel, for example in a base cover of the vessel, but preferably the locations are provided in a lower wall part of the vessel body below the heater.

The mounting locations may, for example, take the form of a groove which extends around the inner circumference of the vessel wall and into which the leaf springs locate, or more preferably a plurality of discrete rebates into which the springs locate. This arrangement has the advantage that any tendency of the retaining ring to rotate circumferentially is prevented.

The vessel wall below the groove or rebate may be thickened so as effectively to increase the depth of the groove or rebate without overly thinning the vessel wall which may then lose strength. Such features can be easily incorporated in bullet shaped mouldings by, for example providing a sliding core or angled ejectors or even by deformation of the moulding whilst it being removed from the mould whilst still hot and flexible.

Means may be provided for retaining the springs in the groove or rebates. For example, a base cover for the vessel may partially overlap the groove or rebate to prevent inward movement of the springs. Most preferably the cover may have an upstanding peripheral wall for this purpose.

Where the spring means comprises a ring as discussed above, the diameter of the bottom wall part is preferably such that the ring may be inserted axially into the bottom of the vessel. The outer diameter of the leaf springs is preferably greater than the inner diameter of the groove or rebates so that they will snap into place.

The ability to insert a biasing spring substantially axially into the bottom of the vessel is a significant advantage in manufacturing terms, so from a further aspect, the invention provides a method of mounting a heater in the base of a liquid heating vessel comprising the step of inserting spring means axially into the base of the vessel for cooperation with the heater and engagement with mounting means on the vessel body wherein the spring means comprises a plurality of leaf spring tongues arranged between the heater and mounting locations on the vessel, the upper ends of the spring tongues being joined by a ring; and the separate, outer ends of the leaf springs tongues extending downwardly to engage the mounting locations on the vessel. Preferrably the leaf springs snap into locating means on the vessel body when the spring has been pushed sufficiently far axially into the vessel.

The heater, seal and vessel are preferably configured so that there is no contact between the heater and the vessel body. Rather, the heater merely contacts the seal which in turn contacts the sealing surface provided in the vessel wall. This reduces the transfer of heat to the vessel wall and means that the heater is effectively free floating on the vessel body and is thus better able to accommodate movement.

A preferred arrangement provides a liquid heating vessel having a planar heater mounted in a floating manner in the base thereof.

The seal may take any suitable form. For example it may be a simple "O" ring type seal or a seal with a rectangular cross section which is compressed between an upper surface of the heater and the vessel body sealing surface. Alternatively it may have a generally C-shaped section, for extending around and receiving a peripheral edge of the heater. Preferably, however, the seal has a generally U-shaped or V-shaped section.

The spring means may act directly on the heater or, for example in the case of a C section seal, on the seal. Most preferably the spring means acts on the peripheral region of the heater or seal.

Preferably the heater has a peripheral flange to receive the seal which may then act to centre the heater in the vessel opening. For this purpose, the flange may be L-shaped or U-shaped.

The sealing surface provided in the vessel wall may comprise a flange extending inwardly from the vessel wall, or more preferably it is formed in the vessel wall itself, e.g. as a step in the wall. The sealing surface may extend generally perpendicularly to the vessel axis.

In the preferred embodiment, however, the sealing surface is defined by a generally vertical lip depending from the vessel body. This arrangement is particularly suited for use with a U-shaped or V-shaped seal as discussed above, and from a further aspect, the invention provides a liquid heating vessel comprising a heater mounted in an opening in the base thereof, said heater comprising a peripheral channel receiving an annular seal having a U-shaped or V-shaped cross section, said seal engaging with a vertically extending lip provided around the said opening.

In the region of the sealing surface, the wall thickness of the vessel body may change abruptly. Due to the shrinkage of material after moulding, this may lead to witness marks on the external face of the vessel, which would be unsightly. Accordingly, in accordance with a preferred arrangement, the external surface of the vessel is provided with means to disguise such marks.

In a preferred arrangement comprises an electric liquid heating vessel comprising a moulded vessel body, said moulded vessel body comprising an internal flange for receiving a seal for a heater in the vessel, the external surface of the vessel wall in the region of said flange being provided with formation means for disguising any shrinkage marks which might form in that region.

The formation may comprise a suitable pattern which would break up any witness mark, and preferably comprises at least one circumferentially extending rib. In another arrangement, the formation may be a groove for receiving a separate band, ring or length of adhesive tape which extends around the region.

Preferred embodiment provides a liquid heating vessel having a planar heater mounted in the base thereof, said heater being biased upwardly in the vessel by resilient means engaging in mounting location means provided in the vessel wall, and comprising means for preventing disengagement of said resilient means from the mounting location means.

A preferred arrangement provides a liquid heating vessel which has a heater mounted in the base thereof, said vessel having an outer wall of moulded plastics which wall tapers outwardly towards its lower end, the inner surface of said wall having a seal receiving surface formed in a lower part thereof and ledge means for locating retaining means for the heater arranged below the seal receiving surface.

Preferably the retaining means comprises a spring.

Some preferred embodiments of the invention will now be described by way of example only, with reference to the accompanying drawings in which:
Figure 1 shows a kettle embodying the present invention;
Figure 2 shows a sectioned detail of the highlighted region of the kettle of Figure 1, showing the mounting of the heater within the kettle;
Figure 3 shows an alternative heater mounting arrangement in accordance with the invention;
Figure 4 shows an exploded view of the arrangement of Figure 3;
Figures 5a to 5d show various views of the retaining ring of the embodiments of Figures 2 and 3;
Figures 6a and 6b show a second embodiment of retaining ring;
Figure 7 shows an alternative mounting arrangement in accordance with the invention with a different form of retaining ring;
Figure 8 shows a yet further mounting arrangement;
Figure 9 shows a yet further mounting arrangement in accordance with the invention;
Figure 10 shows a yet further mounting arrangement in accordance with the invention;
Figure 11 shows a yet further mounting arrangement in accordance with the invention;
Figure 12 shows a yet further mounting arrangement in accordance with the invention;
Figure 13 shows a yet further mounting arrangement in accordance with the invention;
Figure 14 to 14C shows the mounting ring of the embodiment of Figure 13;
Figure 15 shows a yet further mounting arrangement in accordance with the invention;
Figures 16A to 16C shows the mounting ring of the embodiment of Figure 15;
Figure 17 illustrates the production of the mounting ring of Figure 16;
Figure 18 shows a vessel body for use in the invention; and
Figure 19 shows a further vessel body for use in the invention.

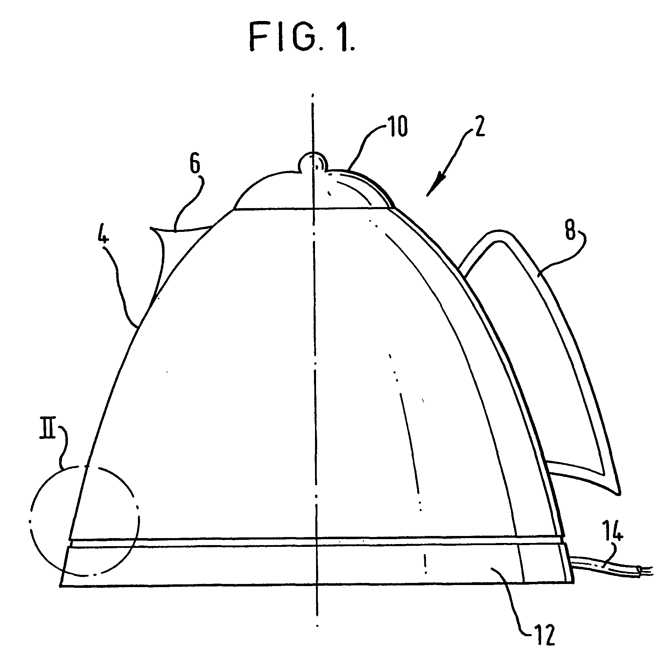

With reference to Figure 1, a liquid heating vessel in the form of a cordless kettle 2 comprises a vessel body 4 moulded from polypropylene or a similar plastics material. A pouring spout 6, a handle 8 and a lid 10 are mounted to the vessel body 4.

The vessel body 4 sits on a separate power base 12 to which power is supplied through a power lead 14.

The vessel body 4 is moulded in a single draw mould, thereby avoiding the need for complicated mould core arrangements. Accordingly, the vessel body 4 is shaped such that there are no substantial re-entrant shapes which would otherwise prevent easy parting of the mould parts. Accordingly, a heater cannot be mounted in the base of the vessel by an arrangement as described in WO96/18331, and an alternative system needs to be employed.

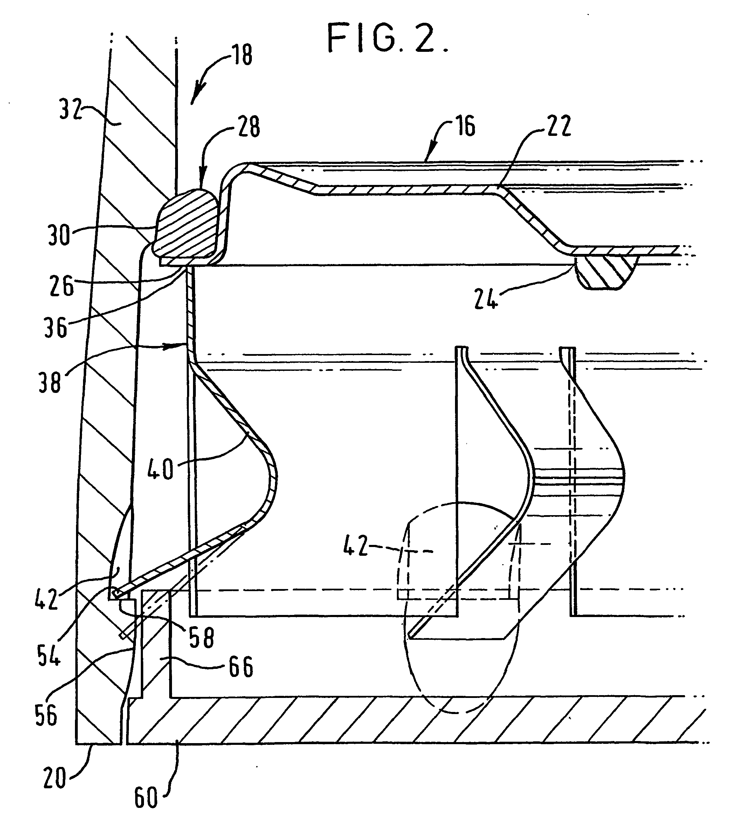

As can be seen in Figure 2, the kettle 2 is provided with a planar heater 16 arranged to close the bottom 18 of the vessel body 4 adjacent the base 20 of the vessel body 4. The heater 16 comprises a generally planar stainless steel metal plate 22 which mounts a sheathed heating element 24 on a central portion thereof by means known *per se.* A thermally sensitive control and an electrical connector (not shown) are also mounted to the heater plate 22 in a manner known per se.

The heater plate 22 is provided with an L-shaped peripheral flange 26 which in use receives a resilient sealing ring 28 of silicone rubber or a similar material. The sealing ring 28 engages within and seals with an annular sealing surface 30 moulded into the lower wall part 32 of the vessel body 4.

It will be seen that the peripheral flange 26 of the heating plate 22 does not extend to the vessel wall 32 in either the radial or axial directions and that it is in contact with only the sealing ring 28. The heater 16 is thus effectively floatingly mounted in the vessel base, the sealing ring 28 acting to centre the heater 16 in the opening 18 in the vessel base. This is advantageous as there is thus no direct thermal contact between the heater 16 and the vessel wall 32 which might lead to local overheating of the vessel wall in an overheat situation.

The underside of the peripheral flange 26 of the heater plate 22 is abutted by the upper end 36 of a spring 38. The spring 38 is generally cylindrical, and is formed with eight depending spring tongues 40 which engage in corresponding rebates 42 provided in the lower wall 30 of the vessel body 4.

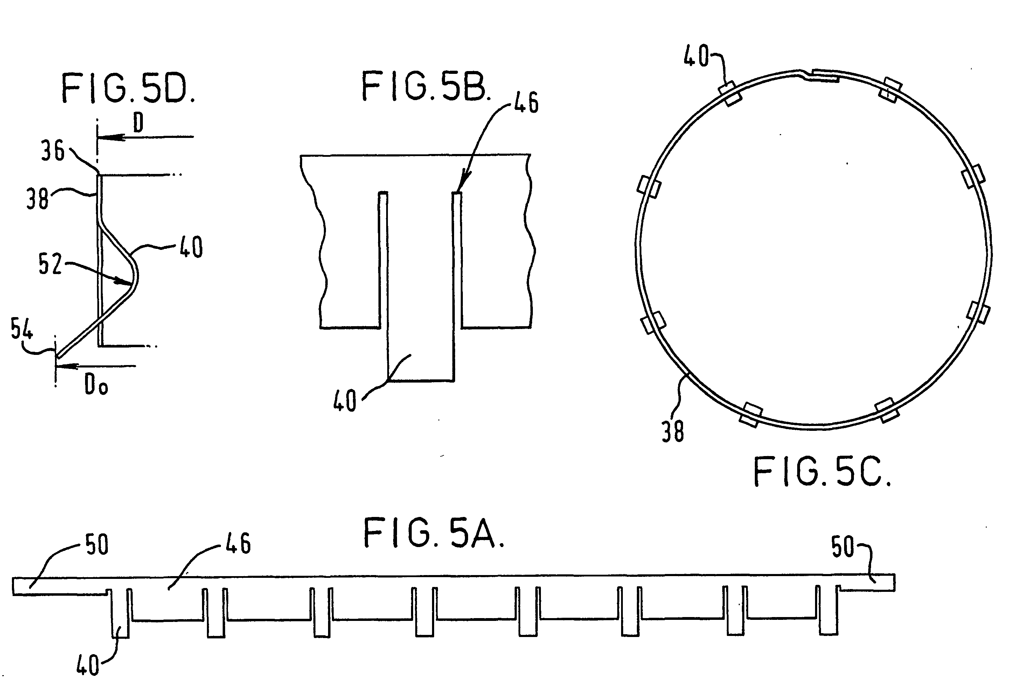

As can be seen from Figures 5a to 5d, the spring 38 is formed from a planar blank 46 having the tongues 40 formed therein in a planar manner. The spring 38 is formed by forming the blank 46 into a cylindrical shape and adjoining the end regions 50 of the blank together e.g. by spot welding. The spring tongues 40 may then be bent into an appropriate shape, as shown in Figure 5d. The blank may typically be formed from .3mm spring steel strip.

Each spring tongue 40 is arcuate, extending initially inwardly of the retaining ring 38 and then outwardly to a diameter D_{O} which is greater that the diameter D_{I} of the upper end 36 of the ring 38. The included angle 52 of each tongue 40 is typically 90° in the relaxed state, and the upper part of the tongue 40 is generally at 40° to the vertical.

The spring force of each spring tongue 40 is designed to be in the region of 3 - 7 kg which will produce a high enough compression force on the sealing ring 28 to produce a satisfactory seal within the sealing surface 30. Furthermore, the shape of the spring tongues is such that the compression force will remain generally constant within the anticipated range of thermal movements of the vessel and maintain an adequate seal between the heater 16 and the vessel wall 32.

Furthermore, the spring tongues 40 are relatively long, meaning that there is a relatively long thermal path between the heater 16 and the mounting rebates 42, which means that there is little likelihood of thermal damage to the latter even in an overheat condition.

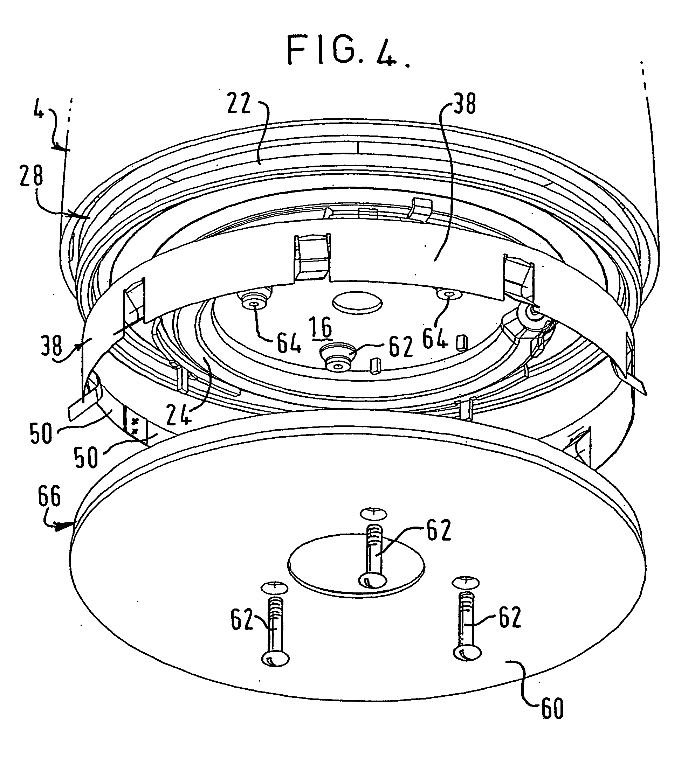

The end regions 50 of the spring blank 46 are shallower than the remainder of the spring blank 46 so that when the spring is formed, it is shallower in that region 53, Figure 4. This allows the passage of a control lever of a thermally sensitive control (not shown) .

Returning to the location of the spring tongues, the bottom end 54 of each tongue engages in a respective rebate 42 formed in the lower wall 30 of the vessel body 4. It will be seen that the thickness of the wall 30 in the region 56 below each rebate 42 is increased so that a wider ledge 58 is provided for receiving the spring tongue 40. This improves the retention of the spring tongue 40 in the rebate 42 without unduly weakening the vessel wall 30 in that region. The wall region 56 below the rebate tapers gently inwardly so as to allow the spring tongues 40 easily to move over the wall region 56 during assembly.

The tongues 40 and the rebates 42 are preferably arranged such that the spring 38 can only properly inserted in one orientation, to ensure that the reduced thickness region 53 is in the correct position in use.

A base cover 60 is suitably mounted to close the bottom end 20 of the vessel body 4 by screws 62 which locate in mounting bosses 64 in the heater 24 (see Figure 4). The outer periphery of the base cover 60 is provided with an upstanding wall 66 which, in the assembled condition, extends above the ledge 58 of the rebate 42 so as to prevent the spring tongue 40 from moving out of the rebate 42.

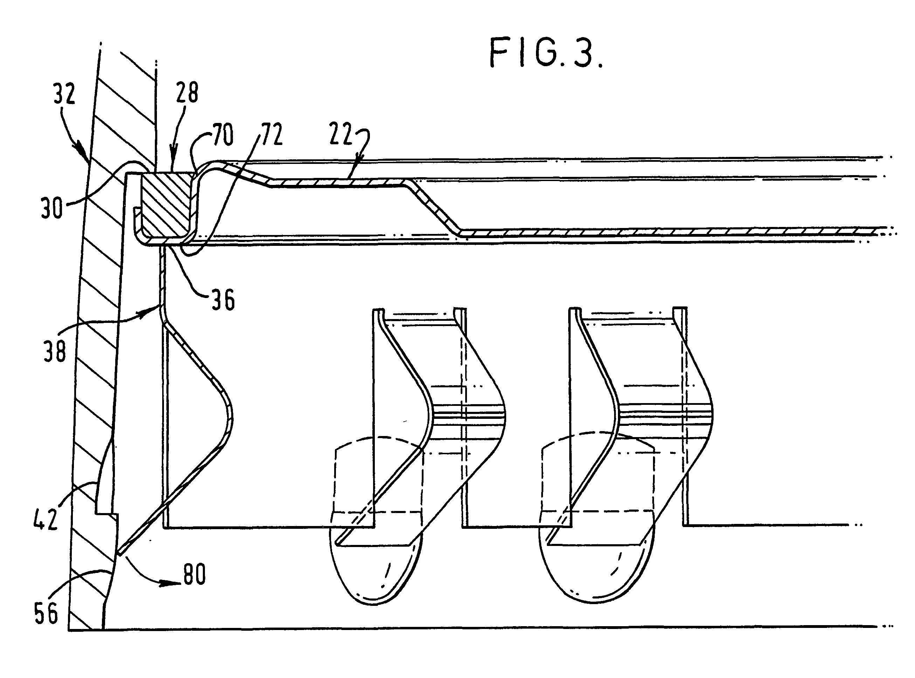

Turning to Figure 3, this shows a similar arrangement to that of Figure 2 but using a slightly different form of heater plate 22. Similar reference numerals are used in this embodiment for features in common with the embodiment of Figure 2.

In this embodiment, the heater plate 22 comprises a generally U-shaped peripheral channel 70 which receives the seal 28. The sealing surface 30 in the vessel wall 32 is generally perpendicular to the axis of the vessel and is abutted by the seal 28. Again the heater does not touch the vessel wall 32. The spring 38 and rebates 42 in this embodiment are the same as that shown in Figure 2.

Assembly of the arrangement shown in Figure 3 will now be described with reference to Figure 4. The method of assembly is generally the same for the arrangement of Figure 2.

Firstly, the seal 28 is located in the peripheral channel 70 of the heater plate 22. The assembled seal and heater plate can then be introduced into the bottom of the vessel body 4 such that the seal 28 abuts the sealing surface 30 in the vessel wall 32 as shown in Figure 3. The spring 38 is then inserted into the bottom of the vessel body 4 in a generally axial direction so that its upper end 36 abuts the lower surface 72 of the peripheral channel 70 of the heater plate 22. The spring tongues 40 are deflected radially inwardly in the direction of the arrow 80 in Figure 3 as they move over the tapering surfaces 56 below the rebates 42. The spring tongues 40 are then pressed further upwardly so that they snap into the rebates 42 thereby providing a resilient biasing force on the lower surface 72 of the heater plate channel 70 to compress the seal 32 against the sealing surface 30 of the vessel body wall 32. In this way only axially applied forces are required to install the heater, which has significant advantages in assembly.

Finally, the base cover 60 is mounted to the bottom of the vessel body 4 so that the peripheral wall 64 thereof extends above the ledge 58 of the rebates 42 to prevent the tongues 40 becoming disengaged from those rebates.

It will be appreciated that should the heater 22 need to be removed from the vessel for whatever purpose, for example to allow re-working of the vessel, the base cover 60 can be removed and the spring tongues 40 released so as to permit unmounting of the heater 22.

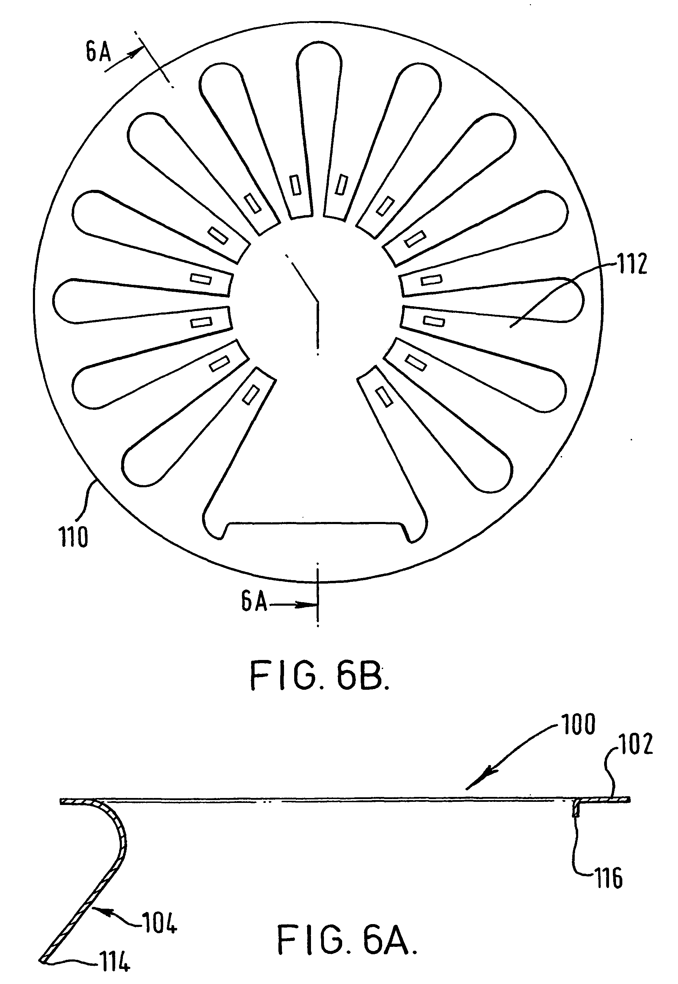

Various modifications can be made to the above described embodiments without departing from the scope of the invention. For example, the spring may take different forms. A first alternative form is shown in Figure 6a and 6b. In this embodiment, the spring 100 comprises a generally planar upper end 102 from which depend arcuate spring tongues 104. The spring tongues 104 are generally similar in shape to those shown in the earlier embodiments, and may each have a similar spring force. In this case, however, the ring 100 is formed from a generally planar blank 110 shown in Figure 6b. It will be seen that this planar blank 110 has fourteen tongues 112 corresponding to the respective spring tongues 104. These extend inwardly from the periphery of the blank 110 and are then bent as shown in Figure 6a so that the lower end 114 of each tongue 104 lies at a larger diameter than the outer diameter of the upper end 102 of the spring 100. This ring 104 is installed in a manner similar to that described above. The ring also includes a cut-away portion 116 to allow for the passage of a control lever of a thermally sensitive control, as in the ring 40 of the earlier embodiments.

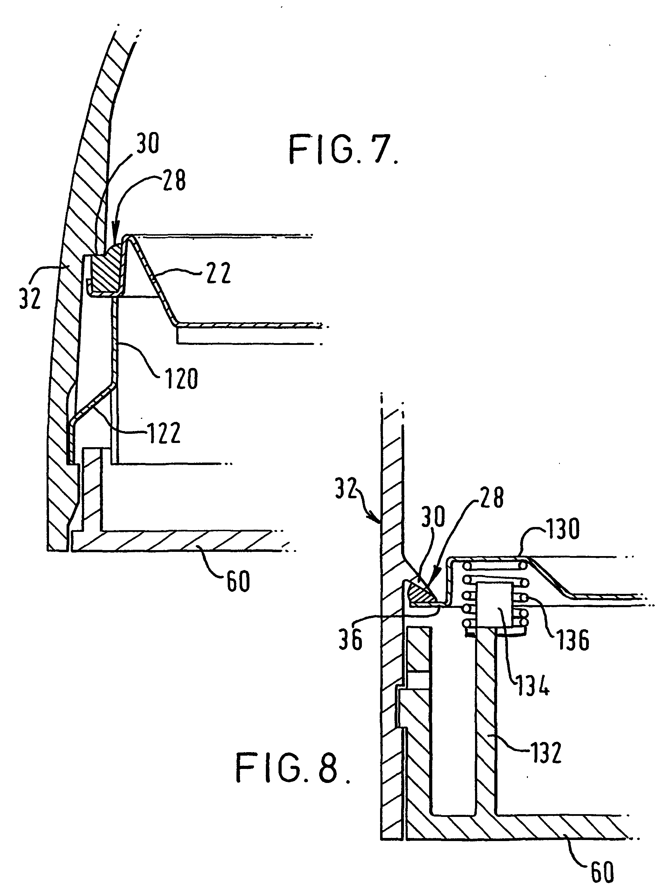

With reference to Figure 7, this shows a further mounting arrangement similar to the arrangement of Figure 3 above, but with a different form of spring 120. The details of the sealing arrangement are the same as in Figure 3, but in this embodiment the spring 120, instead of having generally arcuate spring tongues 40 has the spring tongues 122 are generally knee-shaped, as shown.

Figure 8 shows a mounting arrangement described herein for reference only in which the heater plate 22 is provided with a groove or series of indentations 130 inwardly of a peripheral flange 36. The base cover 60 comprises a peripheral wall 132 having a plurality of mounting posts 134 at the top thereof. The mounting posts mount a plurality (e.g. twelve) coil springs 136 which act against the underside of the groove or formations 130 so as to bias the flange 36 of the heater against the seal 32, and the seal against the wall sealing surface 30. As in the earlier embodiments, the heater plate 22 does not touch the wall 32 of the vessel, and accordingly is mounted in a floating manner.

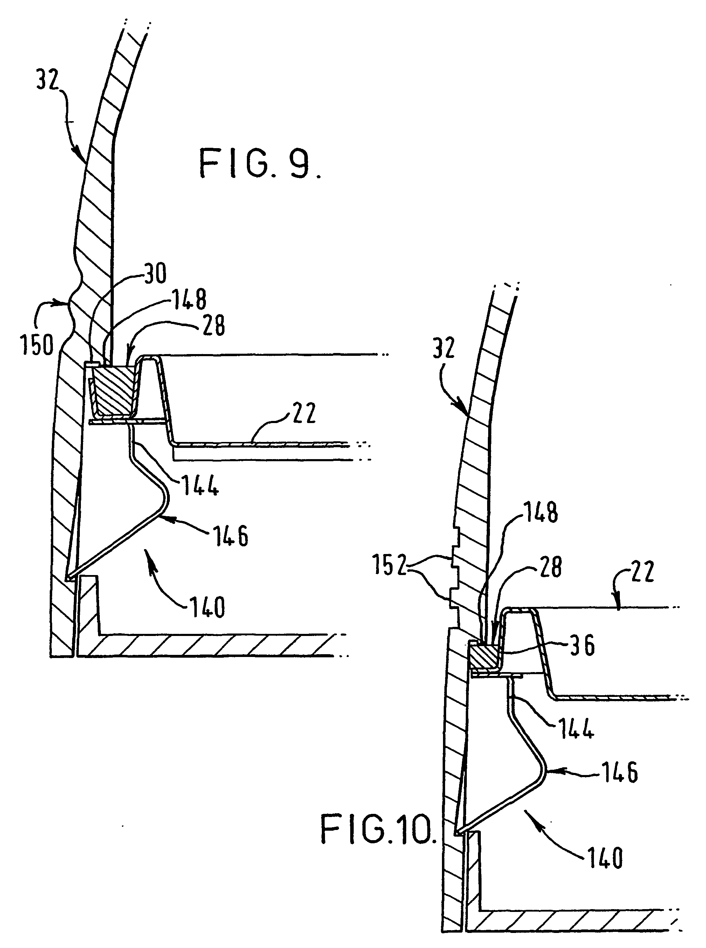

Figure 9 shows a yet further embodiment of the present invention. In this embodiment, the spring 140 is generally similar to that shown in the embodiment of Figures 6A and 6B, being formed from a planar annular blank, suitably bent to shape. In this embodiment, however, the spring tongues 142 are slightly differently shaped, with their upper parts 144 extending parallel to the vessel axis and their lower parts 146 being arcuate as in the earlier embodiment so as to produce the requisite biasing force.

In this embodiment also, the vessel body flange 30 is provided with a bead 148 with which the seal 28 engages. This will provide an improved seal between the sealing surface 30 and the seal 28. Furthermore, the external surface of the vessel body 32 is provided with a series of corrugations 150 in the region adjacent the flange 30. These formations will help to disguise any shrinkage witness marks which might occur in this region due to the abrupt change in wall section at t5he flange 30.

Figure 10 shows a yet further embodiment of the present invention, similar to that of Figure 9, using the same spring but with a slightly different form of heater plate 22, having an L-shaped as opposed to a channel shaped seal receiving flange 36. Also in this embodiment, the corrugations 150 in the lower wall portion 32 of the vessel body have been substituted with rectangular section ribs 152.

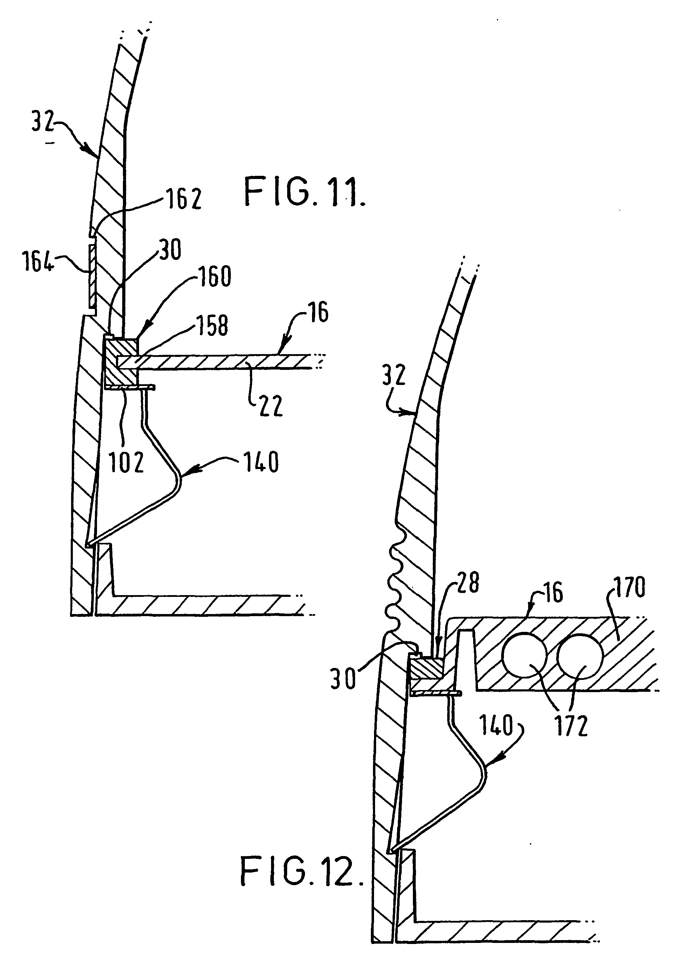

Figure 11 shows a yet further embodiment of the present invention. This embodiment uses the same spring as shown in Figures 9 and 10, but the heater 16 is different in form. In particular, the heater 16 does not have a shaped flange around its periphery, but has an essentially planar periphery 158 which is received within a C-sectioned seal 160 whose upper end engages with the beaded sealing surface 30. The planar surface 102 of the spring 140 engages the underside of the seal 160, and the axial force applied is sufficient to seal between the seal and the vessel body and the seal and the heater plate 22. This form of mounting is particularly suited to mounting completely planar heaters such as thick film heaters which are commonly formed in this way.

In this embodiment also, the formation provided on the outside of the vessel body in the region of the flange 30 comprises a groove 162 into which groove is located for example a metal band 164 which will cover any witness marks in the vessel body.

Figure 12 shows a yet further embodiment of the present invention. In this embodiment, the spring 140 is generally similar to that shown in the embodiment of Figures 9 to 11, but the heater 16 is a different form of heater. In this embodiment, the heater 16 is a die cast heater comprising a body 170 of aluminium or aluminium alloy into which has been cast a sheathed heating element 172. The upper surface of the heater is generally planar, but it could have other profiles.

The heater 16 is provided with a peripheral L-shaped flange 174 for receiving a seal 28 which engages with the beaded vessel sealing surface 30. The upper surface 102 of the spring 140 engages the underside of the flange 174.

The vessel wall 32 is also provided with corrugations 176 in the region of the sealing surface 30 in order to disguise any shrinkage marks which may form in that region.

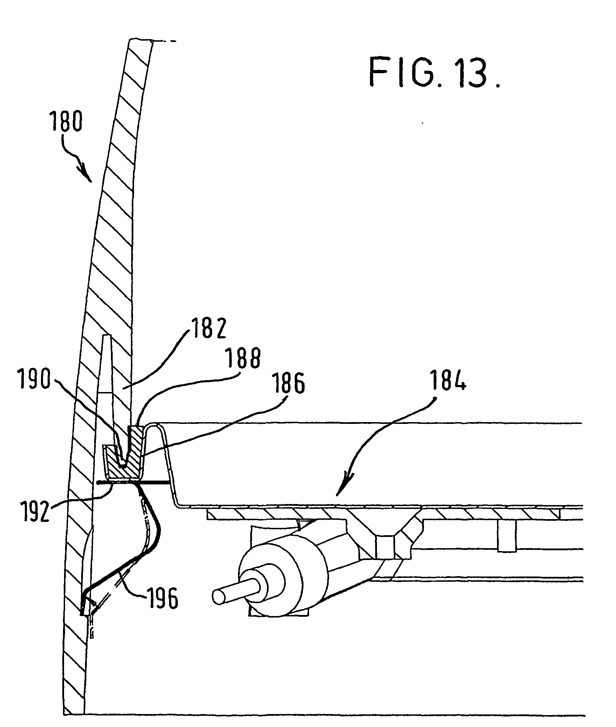

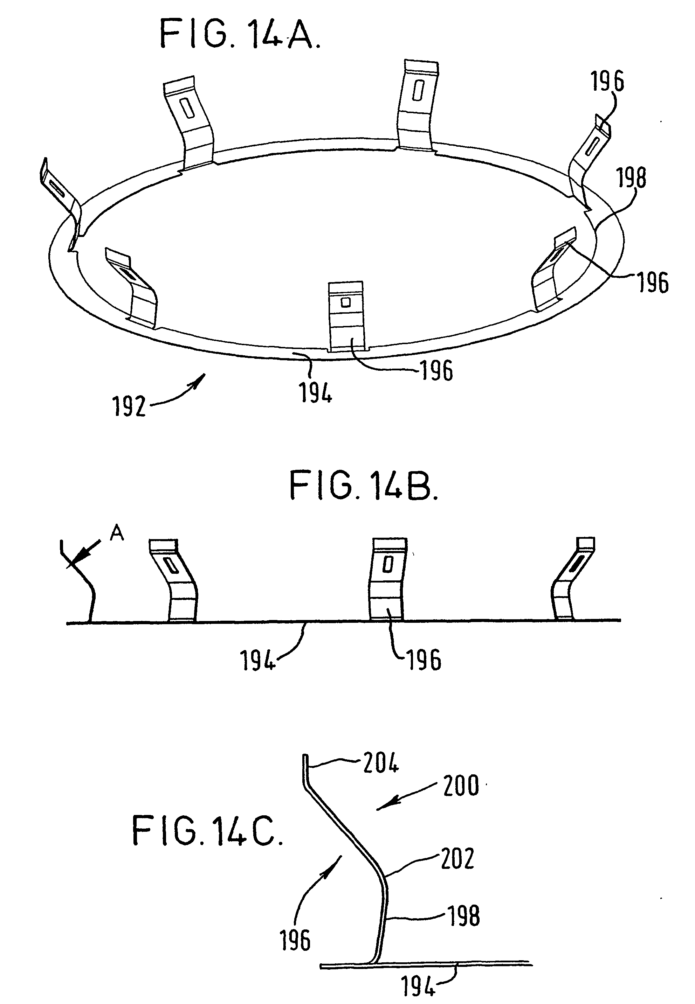

Figures 13 and 14 show a yet further embodiment of the present invention.

In this embodiment, the vessel body 180 is formed with an elongated, generally vertical lip 182. The heater 184 comprises a peripheral mounting channel 186 which receives a seal 188 having a generally U-shaped cross-section. As can be seen from Figure 13, the lower end 190 of the lip 182 is received within the U-shaped seal 188.

The heater is mounted in position by virtue of a mounting spring 192. As can be seen most clearly in Figure 14a, the mounting spring 192 comprises an annular flange 194 from which extend seven spring tongues 196. The spring tongues 196 depend from the inner edge 198 of the flange 194 and include an inwardly inclined section 198, an outwardly inclined section 200, the sections being joined by a bend section 202. An end section 204 extends generally perpendicularly to the flange 194.

As can be seen most clearly in Figure 13, when the mounting spring is installed with the flange 194 abutting the undersurface of the channel 186, the section 204 of each spring tongue 196 engages in a corresponding rebate 206 formed in the vessel body wall 180 and the inclined sections 198 and 200 are brought into a generally perpendicular relationship.

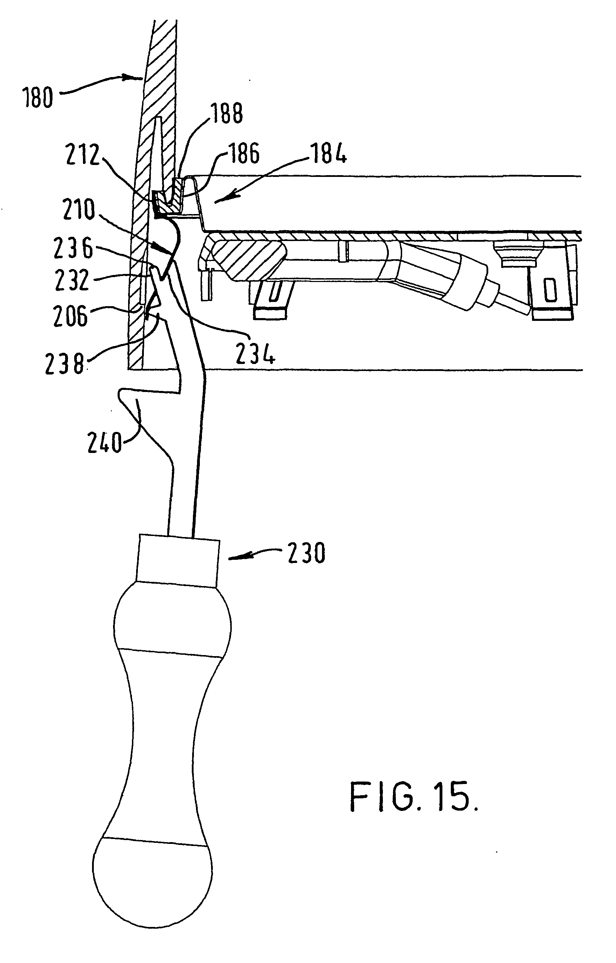

Figures 15 to 17 show a yet further embodiment of the invention.

In this embodiment, the vessel wall 180, the heater 184 and the seal 188 are identical to those in the embodiment of Figures 13 and 14. However, in this embodiment the mounting spring 210 is of a different construction. In fact, the mounting ring 210 is similar in some respects to that shown in the embodiment of Figure 5, comprising an annular vertical wall 212 with seven spring tongues 214 depending from the lower edge thereof. The spring tongues 214 each have a bearing section 216, a bend section 218, a linear section 220 and a tip section 222. Apertures 224 are provided in the linear sections 220 for receiving an installation tool 230, as will be described further below.

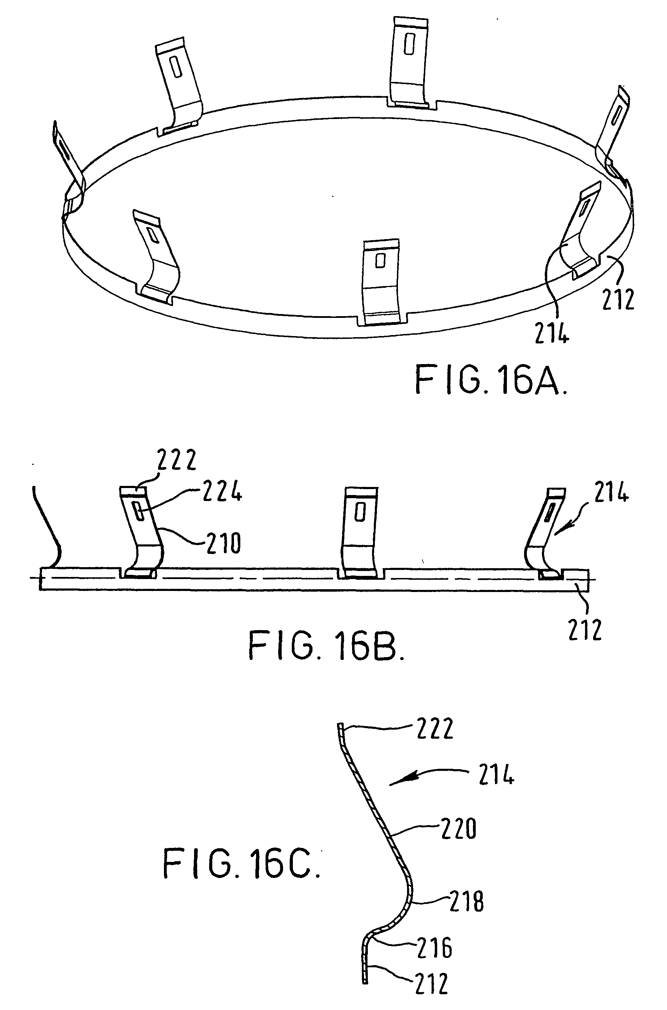

As can be seen in Figure 15, in this embodiment, the vertical wall 212 of the mounting ring does not engage under the mounting channel 186 of the heater but rather engages around the edge thereof. This acts to locate the mounting spring 210 on the heater. As can be seen in Figure 16C, the bearing section 216 is arranged at an angle to the vertical flange 212. However, when installed this bearing section 216 is deflected so as to lie generally perpendicular to the flange 212 and engage the undersurface of the mounting channel 186.

With reference to Figure 15, the mounting ring is installed by an installation tool 230. This comprises a notched end 232 having an inclined surface 234 which engages the linear section 220 of the mounting ring 210. A projection 236 is arranged to extend through the aperture 224 in the spring tongue 214. A lug 238 is arranged to engage the region of the spring tongue 214 between the linear and end sections 220, 222. The handle end of the tool also has a ledge 240 as shown.

To install the heater as shown, the heater 184, with the seal 188 arranged in the peripheral channel 188 is positioned in the base of the vessel and the mounting spring positioned around the channel 188, as shown in Figure 15. The installation tool 230 is then engaged with the spring tongue 214 and moved upwardly in the sense of Figure 15 so as to compress the spring tongue 214. When the installation tool 230 has been moved axially by a predetermined amount, the free end 222 of the spring tongue 214 will snap into the rebate 206 on the vessel wall 180. The ledge 240 prevents the installation tool 230 from being pressed into the bottom of the vessel too far which could result in overstraining of the spring, thereby leading to insufficient spring force being generated.

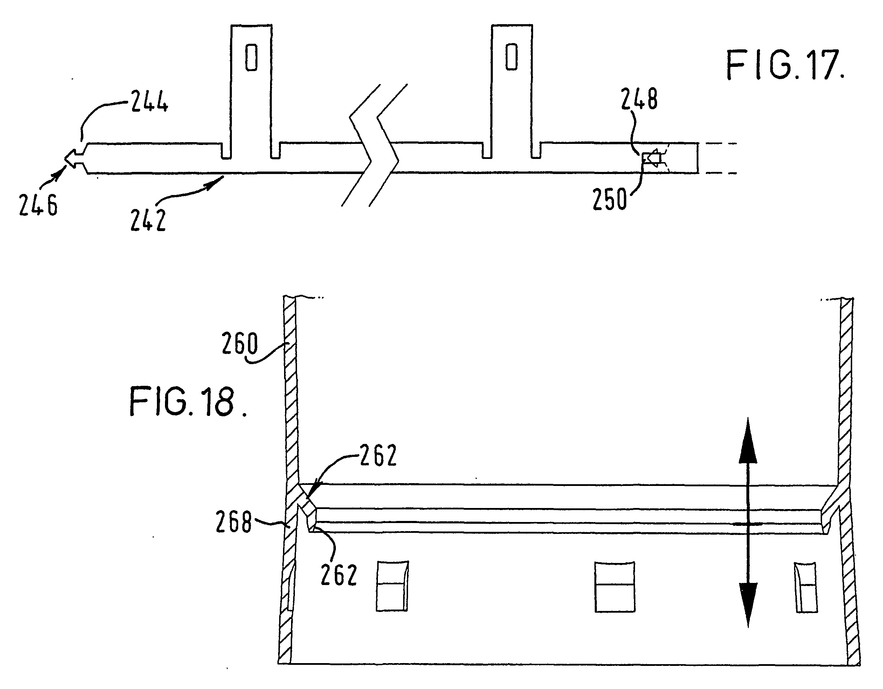

The mounting spring 210 shown in Figures 15 and 16 is formed from a stamped strip of stainless steel e.g. 0.3 mm 302 stainless steel having a shore hardness of 400 to 450. Such a strip 242 is shown in Figure 17.

It will be noted that one end 244 of the strip 242 is provided with an arrow shaped locking head 246 and the other end 248 provided with a slot 250. To make the mounting spring 212, the strip 242 is folded around such that the arrow head 246 is introduced through the slot 250 in the manner shown in phantom lines in the figure. This couples the ends of the strip 242 together, thereby forming the mounting spring.

Figure 18 shows an adaptation of a vessel body for use in the present invention. In this embodiment, a vessel body 260 is formed with a generally vertically extending lip 262 with which providing a lower sealing surface 266. This arrangement is particularly useful in vessels having generally straight walls 260, allowing a moulding tool more easily to form the radially outer surface 268 of the wall 262.

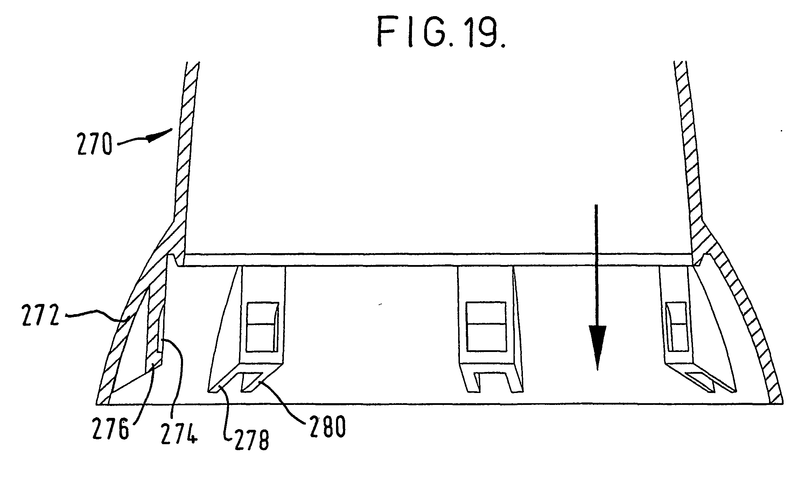

Figure 19 shows a yet further embodiment in which the vessel wall 270 is provided with an outwardly flaring lower section 272. The rebate 274 for receiving the spring tongues of a mounting spring are, in this embodiment, formed in vertical walls 276 which are attached to the external wall 272 by respective webs 278, 280.

In all the embodiments discussed above the lower part of the vessel body, including the sealing surface may be co-moulded with the vessel wall or manufactured as a separate component and subsequently welded or otherwise attached to the vessel wall.

It will be appreciated that the mounting arrangements of the present invention are ideally suited for use in plastics vessels where they overcome movement of the heater, vessel walls and other components without degrading the quality of the seal. The invention also allows a mounting system for use in single-draw mouldings which allows vessels to be produced more economically, and simplifies assembly of the vessel.

Whilst the invention has been described in the above embodiments in the context of sheathed heaters, the planar heater may equally be a thick film heater. Also, as will be apparent from the embodiments, the term planar as used herein is intended to cover heater arrangements which are not entirely planar, but generally any plate-like heater mounted in the bottom of a liquid heating vessel. Furthermore, while the mounting of the invention is particularly suited for use in plastic walled vessels, more particularly ones with a "bullet" profile, it is also suited for use in other vessels for example of metal or glass.

The mounting arrangements described give extremely good sealing of the heater in the vessel and at the same time allow removal of the heater should that prove necessary. The components can then be reused as appropriate. Also, using springs rather than fasteners such as screws to retain the heater in place represents a very significant cost saving.

Furthermore, the invention is not limited to securing circular heaters in position, and it can be used to secure any shape of heater. Accordingly, the spring disclosed above need not necessarily be circular.

## Claims

1. A liquid heating vessel having a body and a heater mounted in a base portion of the body, said vessel body comprising an annular surface for receiving a seal, a seal arranged between the heater and the annular surface, and axially compressible spring means arranged to exert an axial biasing force for sealing the seal against the sealing surface;
wherein the spring means comprises a plurality of leaf spring tongues arranged between the heater and mounting locations on the vessel,
the upper ends of the spring tongues being joined by a ring; and
the separate, outer ends of the leaf spring tongues extending downwardly to engage the mounting locations on the vessel.

2. A liquid heating vessel as claimed in claim 1 wherein the spring means is configured so as to have a relatively low spring rate.

3. A liquid heating vessel as claimed in claim 1 or 2 wherein the spring tongues are relatively long.

4. A liquid heating vessel as claimed in any preceding claim wherein the spring tongues are at least, in part, arcuate.

5. A liquid heating vessel as claimed in any of claims 1 to 4 wherein the spring tongues each exert a biasing force of up to 7kg.

6. A liquid heating vessel as claimed in any of claims 1 to 5 wherein there are provided at least five more preferably at least six and more preferably at least eight spring tongues.

7. A liquid heating vessel as claimed in any preceding claim wherein upper end of the ring is generally planar.

8. A liquid heating vessel as claimed in any preceding claim wherein the ring is generally cylindrical.

9. A liquid heating vessel as claimed in any preceding claim wherein the upper end of the said ring engages an underside of the heater.

10. A liquid heating vessel as claimed in any preceding claim wherein the upper end of said ring engages around an edge of the heater.

11. A liquid heating vessel as claimed in claim 10 wherein said spring tongues are formed with bearing surfaces extending inwardly generally perpendicularly to the plane of said ring.

12. A liquid heating vessel as claimed in any preceding claim wherein the mounting location for the spring means is provided in a lower wall part of the vessel body below the heater.

13. A liquid heating vessel as claimed in claim 12 wherein the mounting location comprises groove or a plurality of discrete rebates into which the spring means engages.

14. A liquid heating vessel as claimed in claim 13 wherein the vessel wall below the groove or rebate is thickened.

15. A liquid heating vessel as claimed in claim 12, 13 or 14 further comprising means for retaining the spring means in the mounting location.

16. A liquid heating vessel as claimed in claim 15 wherein said retaining means is provided on a part of a base cover for the vessel which partially overlaps the mounting location.

17. A liquid heating vessel as claimed in any preceding claim wherein the diameter of the bottom wall part of the vessel is such that the spring means can be inserted axially into the bottom of the vessel.

18. A liquid heating vessel as claimed in any preceding claim wherein the heater, seal and vessel are configured so that there is no contact between the heater and the vessel body.

19. A liquid heating vessel as claimed in any preceding claim wherein the heater has a peripheral flange to receive the seal.

20. A liquid heating vessel as claimed in claim 19 wherein said heater has a peripheral channel which receives a generally U-shaped or V-shaped section seal.

21. A liquid heating vessel as claimed in any preceding claim wherein the spring means acts directly on the heater.

22. A liquid heating vessel as claimed in any preceding claim wherein the spring means acts on the peripheral region of the heater.

23. A liquid heating vessel as claimed in any preceding claim wherein the annular surface for receiving the seal is formed in the wall of the vessel.

24. A liquid heating vessel as claimed in any preceding claim wherein said sealing surface comprises a generally vertically extending lip.

25. A method of mounting a heater in the base of a liquid heating vessel comprising the step of inserting spring means axially into the base of the vessel for cooperation with the heater and engagement with mounting means on the vessel body;
wherein the spring means comprises a plurality of leaf spring tongues arranged between the heater and mounting locations on the vessel,
the upper ends of the spring tongues being joined by a ring; and
the separate, outer ends of the leaf spring tongues extending downwardly to engage the mounting locations on the vessel.

## Patentansprüche

1. Flüssigkeitsheizgefäß mit einem Körper und einer Heizeinrichtung, welche in einem Basisabschnitt des Körpers angebracht ist, wobei der Gefäßkörper umfasst: eine ringförmige Fläche zur Aufnahme einer Dichtung, eine Dichtung, welche zwischen der Heizeinrichtung und der ringförmigen Fläche angeordnet ist, und axial zusammendrückbare Federmittel, welche derart angeordnet sind, dass sie eine axiale Vorspannkraft zum Dichten der Dichtung gegen die Dichtfläche ausüben;
wobei die Federmittel eine Mehrzahl von Blattfederzungen umfassen, welche zwischen der Heizeinrichtung und Anbringungsstellen an dem Gefäß angeordnet sind,
wobei die oberen Enden der Federzungen durch einen Ring verbunden sind; und
wobei die gesonderten, äußeren Enden der Blattfederzungen derart nach unten verlaufen, dass sie mit den Anbringungsstellen an dem Gefäß in Eingriff sind.

2. Flüssigkeitsheizgefäß nach Anspruch 1, wobei die Federmittel derart konfiguriert sind, dass sie eine relativ niedrige Federhärte aufweisen.

3. Flüssigkeitsheizgefäß nach Anspruch 1 oder 2, wobei die Federzungen relativ lang sind.

4. Flüssigkeitsheizgefäß nach einem der vorhergehenden Ansprüche, wobei die Federzungen wenigstens zum Teil bogenförmig sind.

5. Flüssigkeitsheizgefäß nach einem der Ansprüche 1 bis 4, wobei die Federzungen jeweils eine Vorspannkraft von bis zu 7 kg ausüben.

6. Flüssigkeitsheizgefäß nach einem der Ansprüche 1 bis 5, wobei wenigstens fünf, bevorzugter wenigstens sechs und noch bevorzugter wenigstens acht Federzungen vorgesehen sind.

7. Flüssigkeitsheizgefäß nach einem der vorhergehenden Ansprüche, wobei das obere Ende des Rings im Allgemeinen eben ist.

8. Flüssigkeitsheizgefäß nach einem der vorhergehenden Ansprüche, wobei der Ring im Allgemeinen zylindrisch ist.

9. Flüssigkeitsheizgefäß nach einem der vorhergehenden Ansprüche, wobei das obere Ende des Rings mit einer Unterseite der Heizeinrichtung in Eingriff ist.

10. Flüssigkeitsheizgefäß nach einem der vorhergehenden Ansprüche, wobei das obere Ende des Rings um einen Rand der Heizeinrichtung herum in Eingriff ist.

11. Flüssigkeitsheizgefäß nach Anspruch 10, wobei die Federzungen mit Lagerflächen ausgebildet sind, welche im Allgemeinen orthogonal zu der Ebene des Rings nach innen verlaufen.

12. Flüssigkeitsheizgefäß nach einem der vorhergehenden Ansprüche, wobei die Anbringungsstelle für die Federmittel in einem unteren Wandteil des Gefäßkörpers unterhalb der Heizeinrichtung vorgesehen ist.

13. Flüssigkeitsheizgefäß nach Anspruch 12, wobei die Anbringungsstelle eine Nut oder eine Mehrzahl von diskreten Falzen umfasst, in welche die Federmittel eingreifen.

14. Flüssigkeitsheizgefäß nach Anspruch 13, wobei die Gefäßwand unterhalb der Nut oder des Falzes verdickt ist.

15. Flüssigkeitsheizgefäß nach Anspruch 12, 13 oder 14, welches weiterhin Mittel zum Halten der Federmittel in der Anbringungsstelle umfasst.

16. Flüssigkeitsheizgefäß nach Anspruch 15, wobei die Haltemittel auf einem Teil einer Basisabdeckung für das Gefäß vorgesehen sind, welches die Anbringungsstelle teilweise überlappt.

17. Flüssigkeitsheizgefäß nach einem der vorhergehenden Ansprüche, wobei der Durchmesser des Bodenwandteils des Gefäßes derart ist, dass die Federmittel axial in den Boden des Gefäßes eingeführt werden können.

18. Flüssigkeitsheizgefäß nach einem der vorhergehenden Ansprüche, wobei die Heizeinrichtung, die Dichtung und das Gefäß derart konfiguriert sind, dass es keinen Kontakt zwischen der Heizeinrichtung und dem Gefäßkörper gibt.

19. Flüssigkeitsheizgefäß nach einem der vorhergehenden Ansprüche, wobei die Heizeinrichtung einen Umfangsflansch zur Aufnahme der Dichtung aufweist.

20. Flüssigkeitsheizgefäß nach Anspruch 19, wobei die Heizeinrichtung einen Umfangskanal aufweist, welcher eine im Allgemeinen U-förmige oder V-förmige Abschnittsdichtung aufnimmt.

21. Flüssigkeitsheizgefäß nach einem der vorhergehenden Ansprüche, wobei die Federmittel direkt auf die Heizeinrichtung wirken.

22. Flüssigkeitsheizgefäß nach einem der vorhergehenden Ansprüche, wobei die Federmittel auf den Umfangsbereich der Heizeinrichtung wirken.

23. Flüssigkeitsheizgefäß nach einem der vorhergehenden Ansprüche, wobei die ringförmige Fläche zur Aufnahme der Dichtung in der Wand des Gefäßes ausgebildet ist.

24. Flüssigkeitsheizgefäß nach einem der vorhergehenden Ansprüche, wobei die Dichtfläche eine im Allgemeinen senkrecht verlaufende Lippe umfasst.

25. Verfahren zur Anbringung einer Heizeinrichtung in der Basis eines Flüssigkeitsheizgefäßes, welches den Schritt umfasst, Federmittel in die Basis des Gefäßes für ein Zusammenwirken mit der Heizeinrichtung und für einen Eingriff mit Anbringungsmitteln an dem Gefäßkörper axial einzuführen;
wobei die Federmittel eine Mehrzahl von Blattfederzungen umfassen, welche zwischen der Heizeinrichtung und den Anbringungsstellen an dem Gefäß angeordnet sind,
wobei die oberen Enden der Federzungen durch einen Ring verbunden sind; und
wobei die gesonderten, äußeren Enden der Blattfederzungen derart nach unten verlaufen, dass sie die Anbringungsstellen an dem Gefäß in Eingriff nehmen.

## Revendications

1. Un récipient pour chauffer les liquides comportant un corps et un réchauffeur monté dans une partie basse du corps, ledit corps de récipient comportant une surface annulaire destinée à recevoir un joint, un joint disposé entre le réchauffeur et la surface annulaire, et un ensemble ressort axialement compressible disposé pour exercer une force de précontrainte pour plaquer le joint contre la surface d'étanchéité ;
dans lequel l'ensemble ressort est constitué d'une pluralité de languettes-ressort disposées entre le réchauffeur et des emplacements de montage prévus sur le récipient,
les extrémités supérieures des languettes-ressort étant assemblées par une bague ; et
les extrémités extérieures séparées des languettes-ressort s'étendant vers le bas pour pénétrer dans les emplacements de montage prévus sur le récipient.

2. Un récipient pour chauffer les liquides selon la revendication 1, dans lequel le ressort est configuré de manière à présenter une faible constante de rappel.

3. Un récipient pour chauffer les liquides selon la revendication 1 ou 2, dans lequel les languettes-ressort sont relativement longues.

4. Un récipient pour chauffer les liquides selon l'une quelconque des revendications précédentes, dans lequel les languettes-ressort sont au moins, en partie, courbes.

5. Un récipient pour chauffer les liquides selon l'une quelconque des revendications 1 à 4, dans lequel chaque languette-ressort exerce une force de précontrainte de 7 kg maximum.

6. Un récipient pour chauffer les liquides selon l'une quelconque des revendications 1 à 5, dans lequel sont prévues au moins cinq, de préférence au moins six, et de manière encore plus préférentielle au moins huit languettes-ressort.

7. Un récipient pour chauffer les liquides selon l'une quelconque revendications précédentes, dans lequel l'extrémité supérieure de la bague est généralement plane.

8. Un récipient pour chauffer les liquides selon l'une quelconque des revendications précédentes, dans lequel la bague est généralement cylindrique.

9. Un récipient pour chauffer les liquides selon l'une quelconque des revendications précédentes, dans lequel l'extrémité supérieure de ladite bague pénètre dans une partie inférieure du réchauffeur.

10. Un récipient pour chauffer les liquides selon l'une quelconque des revendications précédentes, dans lequel l'extrémité supérieure de ladite bague s'engage autour d'un bord du réchauffeur.

11. Un récipient pour chauffer les liquides selon la revendication 10, dans lequel lesdites languettes-ressort comportent des surfaces d'appui s'étendant vers l'intérieur, généralement de manière perpendiculaire au plan de ladite bague.

12. Un récipient pour chauffer les liquides selon l'une quelconque des revendications précédentes, dans lequel l'emplacement de montage de l'ensemble ressort est prévu dans une partie de la paroi inférieure du corps du récipient sous le réchauffeur.

13. Un récipient pour chauffer les liquides selon la revendication 12, dans lequel l'emplacement de montage comporte une gorge ou une pluralité de rainures distinctes dans lesquelles s'engage l'ensemble ressort.

14. Un récipient pour chauffer les liquides selon la revendication 13, dans lequel la paroi du récipient au-dessous de la gorge ou rainure est épaissie.

15. Un récipient pour chauffer les liquides selon les revendications 12, 13 ou 14 comportant, en outre, un moyen de retenue de l'ensemble ressort dans l'emplacement de montage.

16. Un récipient pour chauffer les liquides selon la revendication 15, dans lequel ledit moyen de retenue est prévu sur une partie d'un couvercle de fond du récipient qui chevauche partiellement l'emplacement de montage.

17. Un récipient pour chauffer les liquides selon l'une quelconque des revendications précédentes, dans lequel le diamètre de la paroi inférieure du réservoir est tel que l'ensemble ressort peut être inséré axialement dans le fond du récipient.

18. Un récipient pour chauffer les liquides selon l'une quelconque des revendications précédentes, dans lequel le réchauffeur, le joint d'étanchéité et lc récipient sont configurés de manière à éviter tout contact entre le réchauffeur et le corps du récipient.

19. Un récipient pour chauffer les liquides selon l'une quelconque des revendications précédentes, dans lequel le réchauffeur présente un flasque périphérique pour recevoir le joint.

20. Un récipient pour chauffer les liquides selon la revendication 19, dans lequel ledit réchauffeur comporte un canal périphérique qui reçoit un joint dont le profil est généralement en forme de U ou de V.

21. Un récipient pour chauffer les liquides selon l'une quelconque des revendications précédentes, dans lequel l'ensemble ressort agit directement sur le réchauffeur.

22. Un récipient pour chauffer les liquides selon l'une quelconque des revendications précédentes, dans lequel l'ensemble ressort agit sur la région périphérique du réchauffeur.

23. Un récipient pour chauffer les liquides selon l'une quelconque des revendications précédentes, dans lequel la surface annulaire destinée à recevoir le joint est ménagée dans la paroi du récipient.

24. Un récipient pour chauffer les liquides selon l'une quelconque des revendications précédentes, dans lequel ladite surface d'étanchéité est une lèvre s'étendant verticalement.

25. Une méthode pour le montage d'un réchauffeur dans la partie inférieure d'un récipient de chauffage des liquides, consistant à insérer un ensemble ressort axialement dans la partie inférieure du récipient pour que le ressort coopère avec le réchauffeur et pénètre dans les moyens de montage prévus sur le corps du récipient ;
dans lequel l'ensemble ressort est constitué d'une pluralité de languettes disposées entre le réchauffeur et les emplacements de montage sur le récipient,
les extrémités supérieures des languettes-ressort étant assemblées par une bague ; et
les extrémités extérieures séparées s'étendant vers le bas pour pénétrer dans les emplacements de montage prévus sur le récipient.
